# EUROPÄISCHE PATENTSCHRIFT

(11) **EP 1 771 505 B1**
(45) Veröffentlichungstag und Bekanntmachung des Hinweises auf die Patenterteilung: **03.12.2008**
(21) Anmeldenummer: 05773755.3
(22) Anmeldetag: 08.07.2005
(51) Int. Cl.: C08K 5/02, C08K 5/00, C08J 9/00, C08J 9/16, B29C 47/10

(54) **SYNERGISTISCHE FLAMMSCHUTZMISCHUNGEN FÜR POLYSTYROLSCHAUMSTOFFE**
SYNERGISTIC FLAME-PROOF MIXTURES FOR POLYSTYRENE FOAMS
MELANGES IGNIFUGEANTS A EFFET SYNERGIQUE POUR MOUSSES DE POLYSTYRENE

(30) Priorität: 15.07.2004 DE 102004034514
(43) Veröffentlichungstag der Anmeldung: 11.04.2007
(73) Patentinhaber: BASF SE, 67056 Ludwigshafen (DE)
(72) Erfinder: HAHN, Klaus, 67281 Kirchheim (DE); EHRMANN, Gerd, 67146 Deidesheim (DE); RUCH, Joachim, 67157 Wachenheim (DE); ALLMENDINGER, Markus, 67480 Edenkoben (DE); SCHMIED, Bernhard, 67227 Frankenthal (DE); HOLOCH, Jan, 69181 Leimen (DE); SCHMAUS, Paulus, 67071 Ludwigshafen (DE)
(86) Internationale Anmeldenummer: PCT/EP2005/007399
(87) Internationale Veröffentlichungsnummer: WO 2006/007996

(56) Entgegenhaltungen:
- EP-A- 0 863 175
- WO-A-97/45477
- US-A- 4 272 583
- US-A1- 2004 039 073
- DATABASE CAPLUS [Online] CHEMICAL ABSTRACTS SERVICE, COLUMBUS, OHIO, US; 20. November 1984 (1984-11-20), KANEGAFUCHI CHEMICAL INDUSTRY CO.: "JP59204627: Self-extinguishing styrene resin extrusion foams" XP002349022 gefunden im HCAPLUS Database accession no. 102:133020

## Beschreibung

Die Erfindung betrifft Verfahren zur Herstellung von flammgeschützten, expandierbaren Styrolpolymeren (EPS) gemäß Anspruch 1 wobei als Flammschutzmittel eine organische Bromverbindung mit einem Bromgehalt von mindestens 70 Gew.-% und ein flüssiges Peroxid oder Hydroperoxid oder eine Peroxidlösung als Flammschutzsynergist eingesetzt wird.

Verfahren zur Herstellung von flammgeschützten, expandierbaren Styrolpolymeren durch Extrusion einer treibmittelhaltigen Styrolpolymerschmelze sind z. B aus EP-A 0 981 574, WO 97/45477 oder WO 03/46016 bekannt. Hierbei wird das Flammschutzmittel gegebenenfalls zusammen mit weiteren Additiven mit Polystyrol aufgeschmolzen und anschließend ein Treibmittel zugegeben.

Als Flammschutzsynergisten für halogenierte Flammschutzmittel, wie Hexabromcyclododekan (HBCD) werden hierbei in der Regel thermische Radikalbildner, z.B. Dicumylperoxid oder Dicumyl, verwendet. Dicumylperoxid und Dicumyl können als pulverförmige Feststoffe in einem Extrusionsprozess nur in einem druckbeaufschlagten Raum in die Polystyrolmatrix zudosiert werden.

Durch den Extrusionsprozess erhöht sich die Temperaturbelastung für die thermosensiblen Peroxide aufgrund der Verweilzeit und durch lokale, scherinduzierte Temperaturspitzen. Daher sind Peroxide mit einer niedrigen Halbwertszeit bei Temperaturen von 150 bis 250°C wenig geeignet. Zur Herstellung von Polystyrolextrusionschaumstoffen (XPS) wird daher Dicumyl trotz seines höheren Preises und geringerer Wirksamkeit wegen seiner deutlich höheren Halbwertszeit gegenüber Dicumylperoxid als Flammschutzsynergist bevorzugt.

Polystyrolpartikelschaumstoffe mit besonders niedrigen Reststyrol- und Ethylbenzol-Gehalt sind in einer Vielzahl von Anwendungen von Interesse. Dazu gehören Produkte mit Lebensmittelkontakt aber auch Schaumstoff-Formteile in Automobilanwendungen. Niedrige Reststyrol- und Ethylbenzol-Anteile reduzieren das sog. Fogging, eine nachteilige Eigenschaft, die insbesondere für Anwendungen im Automobilsektor von Bedeutung ist.

In der bisher für die EPS-Herstellung eingesetzten Suspensionspolymerisation können niedrige Reststyrol-Anteile nur durch lange Polymerisationszeiten auf hohem Temperaturniveau erreicht werden. Dies wirkt sich sehr nachteilig auf die Polymerisationszykluszeit aus.

Aufgabe der vorliegenden Erfindung war es daher, den genannten Nachteilen abzuhelfen und ein Verfahren zur Herstellung von flammgeschützten, expandierbaren Styrolpolymeren (EPS) bereitzustellen, bei dem der Flammschutzsynergist einfach und schonend dosiert werden kann.

Demgemäß wurden die eingangs beschriebenen Verfahren gefunden.

Es hat sich gezeigt, dass Styrolpolymere mit Molekulargewichten Mw von unter 170.000 bei der Granulierung zu Polymerabrieb führen. Bevorzugt weist das expandierbare Styrolpolymer ein Molekulargewicht im Bereich von 190.000 bis 400.000 g/mol, besonders bevorzugt im Bereich von 220.000 bis 300.000 g/mol auf. Aufgrund des Molekulargewichtsabbau durch Scherung und/oder Temperatureinwirkung liegt das Molekulargewicht des expandierbaren Polystyrols in der Regel etwa 10.000 g/mol unter dem Molekulargewicht des eingesetzten Polystyrols.

Um möglichst kleine Granulatpartikel zu erhalten, sollte die Strangaufweitung nach dem Düsenaustritt möglichst gering sein. Es hat sich gezeigt, dass die Strangaufweitung unter anderem durch die Molekulargewichtsverteilung des Styrolpolymeren beeinflusst werden kann. Das expandierbare Styrolpolymer sollte daher bevorzugt eine Molekulargewichtsverteilung mit einer Uneinheitlichkeit M_{w}/Mₙ von höchstens 3.5, besonders bevorzugt im Bereich von 1,5 bis 3 und ganz besonders bevorzugt im Bereich von 1,8 bis 2,6 aufweisen.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-a-Methstyrol-copolymere, Acrylnitril-Butadien-Styrolpolymerisate (ABS), Styrol-Acrylnitril (SAN) Acrylnitril-Styrol-Acrylester (ASA), Methyacrylat-Butadien-Styrol (MBS), Methylmethacrylat-Acrylnitril-Butadien-Styrol (MABS)- polymerisate oder Mischungen davon oder mit Polyphenylenether (PPE) eingesetzt.

Die genannten Styrolpolymeren können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.%, bevorzugt im Bereich von 1 bis 10 Gew.%, bezogen auf die Polymerschmelze, abgemischt werden. Desweiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestern möglich.

Als Verträglichkeitsvermittler eignen sich z.B. Maleinsäureanhydrid-modifizierte Styrolcopolymere, Epoxidgruppenhaltige Polymere oder Organosilane.

Der Styrolpolymerschmelze können auch Polymerrecyklate der genannten thermoplastischen Polymeren, insbesondere Styrolpolymere und expandierbare Styrolpolymerer (EPS) in Mengen zugemischt werden, die deren Eigenschaften nicht wesentlich verschlechtern, in der Regel in Mengen von maximal 50 Gew.%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.%, bezogen auf die treibmittelhaltige Styrolpolymerschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt.

Zur Verbesserung der Verschäumbarkeit können feinverteilte Innenwassertröpfchen in die Styrolpolymermatrix eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischen oder statischen Mischern erreicht werden.

In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymeren (EPS) ein Expansionsvermögen α, definiert als Schüttdichte vor dem Verschäumen/Schüttdichte nach dem Verschäumen höchstens 125 bevorzugt 25 bis 100 aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Als Flammschutzmittel werden organische Bromverbindung mit einem Bromgehalt von mindestens 70 Gew.% eingesetzt. Insbesondere geeignet sind aliphatische, cycloa-liphatische und aromatische Bromverbindungen, wie Hexabromcyclododekan, Pentabrommonochlorcyclohexan, Pentabromphenylallylether. Das Flammschutzmittel wird in der Regel in Mengen von 0,2 bis 5, bevorzugt von 0,5 bis 2,5 Gew.%, bezogen auf das Styrolpolymer, eingesetzt.

Geeignete Flammschutzsynergisten sind thermische Radikalbildner mit Halbwertszeiten von 6 Minuten bei Temperaturen im Bereich von 110 bis 300°C, bevorzugt 140 bis 230°C, die flüssig oder in Wasser, Kohlenwasserstoffen oder Weisöl löslich sind. Bevorzugt wird als Flammschutzsynergist Di-tert.-butyl-peroxid (Trigonox® B), Tert.-butylhydroperoxid (Trigonox® A80), eine Lösung von Dicumylperoxid in Pentan oder eine wässrige Lösung eines Peroxides oder Hydroperoxides eingesetzt. Der Flammschutzsynergist wird bevorzugt rein oder im Falle von Feststoffen in bei Normalbedingungen (1 bar, 23°C) nahezu gesättigter Lösung eingesetzt, so dass er mit klassischen Pumpsystemen direkt in einen temperierten und druckbeaufschlagten Raum dosiert werden kann. Durch das Vorliegen in flüssiger Phase ist eine Dosierung so möglich, dass auch von niedrig zerfallenden Peroxiden ausreichende Mengen die Prozess- bzw. Extrusi-onsbedingungen überstehen und trotzdem eine homogene Einmischung erreicht wird. In der Regel wird der Flammschutzsynergist in Mengen im Bereich von 0,05 bis 1 Gew.-%, bevorzugt im Bereich von 0,1 bis 0,5 Gew.-% eingesetzt.

Mit Ausnahme der wasserlöslichen Hydroperoxide kann das erfindungsgemäße Verfahren auch bei der Herstellung von flammgeschützten, expandierbaren Styrolpolymeren nach dem Suspensionsverfahren eingesetzt werden. In der Suspension ermöglicht die Verwendung von flüssigen Peroxiden eine sichere Handhabung aufgrund der Pumpbarkeit und eine leichte Homogenisierung in der organischen Phase.

Das erfindungsgemäße Verfahren wird zur Herstellung von flammgeschützten, expandierbaren Styrolpolymeren (EPS) eingesetzt, wobei das Flammschutzmittel in einem Seitenextruder mit einem Anteil Styrolpolymerschmelze vorgemischt und einer Treibmittel-haltigen Styrolpolymerschmelze im Hauptstrom zudosiert und gemeinsam durch eine Düsenplatte mit anschließender Unterwassergranulation extrudiert wird. Der Flammschutzsynergist wird bevorzugt über eine Pumpe und Dosierlanze auf gleicher Höhe in den Hauptstrom direkt dosiert.

Hierbei kann die Verweilzeit des Flammschutzmittels und des Flammschutzsynergisten bei einer Schmelzetemperatur im Bereich von 140 bis 220°C, bevorzugt im Bereich von 170 bis 200°C bei weniger als 15 Minuten gehalten werden Zusätzlich kann über die zudosierte Menge an Peroxid/Hydroperoxid im Extruder/statischem Mischer das Molekulargewicht und darüber die VZ des PolymerMaterials eingestellt werden. Dies wiederum ermöglicht eine Anpassung der Expandierbarkeit und der Materialeigenschaften des EPS.

Des weiteren können der Styrolpolymerschmelze Additive, Keimbildner, Füllstoffe, Weichmacher, lösliche und unlösliche anorganische und/oder organische Farbstoffe und Pigmente, z.B. IR-Absorber, wie Ruß, Graphit oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein ein Dispergierhilfsmittel, z.B Organosilane, epoxygruppenhaltige Polymere oder Maleinsäureanhydrid-gepfropfte Styrolpolymere, einzusetzen. Bevorzugte Weichmacher sind Mineralöle, Phtalate, die in Mengen von 0,05 bis 10 Gew.-%, bezogen auf das Styrolpolymerisat, eingesetzt werden können.

Zur Herstellung der erfindungsgemäßen expandierbaren Styrolpolymerisate wird das Treibmittel in die Polymerschmelze eingemischt. Das Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
a) Polymerisationsreaktor - statischer Mischer/Kühler - Granulator
b) Polymerisationsreaktor - Extruder - Granulator
c) Extruder - statischer Mischer - Granulator
d) Extruder - Granulator

Weiterhin kann die Anordnung Seitenextruder zur Einbringung von Additiven, z.B. von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polystyrolschmelze beheizt. Bevorzugt liegt die Temperatur der Düsenplatte im Bereich von 20 bis 100°C über der Temperatur der treibmittelhaltigen Polystyrolschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Die Strangaufweitung kann außer über die Molekulargewichtsverteilung durch die Düsengeometrie beeinflusst werden. Die Düsenplatte weist bevorzugt Bohrungen mit einem Verhältnis L/D von mindestens 2 auf, wobei die Länge (L) den Düsenbereich, dessen Durchmesser höchstens dem Durchmesser (D) am Düsenaustritt entspricht, bezeichnet. Bevorzugt liegt das Verhältnis L/D im Bereich von 3 - 20.

Im allgemeinen sollte der Durchmesser (E) der Bohrungen am Düseneintritt der Düsenplatte mindestens doppelt so groß wie der Durchmesser (D) am Düsenaustritt sein.

Eine Ausführungsform der Düsenplatte weist Bohrungen mit konischem Einlauf und einem Einlaufwinkel α kleiner 180°, bevorzugt im Bereich von 30 bis 120° auf. In einer weiteren Ausführungsform besitzt die Düsenplatte Bohrungen mit konischem Auslauf und einen Auslaufwinkel β kleiner 90°, bevorzugt im Bereich von 15 bis 45°. Um gezielte Granulatgrößenverteilungen der Styrolpolymeren zu erzeugen kann die Düsenplatte mit Bohrungen unterschiedlicher Austrittsdurchmesser (D) ausgerüstet werden. Die verschiedenen Ausführungsformen der Düsengeometrie können auch miteinander kombiniert werden.

Ein besonders bevorzugtes Verfahren zur Herstellung von expandierbaren Styrolpolymeren umfasst die Schritte
a) Polymerisation von Styrolmonomer und gegebenenfalls copolymersierbaren Monomeren zu einem Styrolpolymer mit einem mittleren Molekulargewicht im Bereich von 160.000 bis 400.000 g/mol,
b) Entgasungung der erhaltenen Styrolpolymerschmelze,
c) Einmischen des Treibmittels und gegebenenfalls Additiven, in die Styrolpolymerschmelze mittels statischen oder dynamischen Mischer bei einer Temperatur von mindestens 150°C, bevorzugt 180 - 260°C,
d) Kühlen der treibmittelhaltigen Styrolpolymerschmelze auf eine Temperatur, die mindestens 120°C, bevorzugt 150 - 200°C beträgt,
e) Eintragen des Flammschutzmittels über einen Seitenextruder,
f) Austrag durch eine Düsenplatte mit Bohrungen, deren Durchmesser am Düsenaustritt höchstens 1,5 mm beträgt und
g) Granulieren der treibmittelhaltigen Schmelze.

In Schritt g) kann die Granulierung direkt hinter der Düsenplatte unter Wasser bei einem Druck im Bereich von 1 bis 25 bar, bevorzugt 5 bis 15 bar erfolgen.

Aufgrund der Polymerisation in Stufe a) und Entgasung in Stufe b) steht für die Treibmittelimpägnierung in Stufe d) direkt eine Polymerschmelze zur Verfügung und ein Aufschmelzen von Styrolpolymeren ist nicht notwendig. Dies ist nicht nur wirtschaftlicher, sondern führt auch zu expandierbaren Styrolpolymeren (EPS) mit niedrigen Styrolmonomergehalten, da die mechanischen Schereinwirkung im Aufschmelzbereich eines Extruders, die in der Regel zu einer Rückspaltung von Monomeren führt, vermieden wird. Um den Styrolmonomerengehalt niedrig zu halten, insbesondere unter 500 ppm mit Styrolmomomergehalten, ist es ferner zweckmäßig, den mechanischen und thermischen Energieeintrag in allen folgenden Verfahrensstufen so gering wie möglich zu halten. Besonders bevorzugt werden daher Scherraten unter 50/sec, bevorzugt 5 bis 30/sec, und Temperaturen unter 260°C sowie kurze Verweilzeiten im Bereich von 1 bis 20, bevorzugt 2 bis 10 Minuten in den Stufen d) bis f) eingehalten. Besonders bevorzugt werden ausschließlich statische Mischer und statische Kühler im gesamten Verfahren eingesetzt. Die Polymerschmelze kann durch Druckpumpen, z.B. Zahnradpumpen gefördert und ausgetragen werden.

Eine weitere Möglichkeit zur Verringerung des Styrolmonomerengehaltes und/oder Restlösungsmittel wie Ethylbenzol besteht darin, in Stufe b) eine Hochentgasung mittels Schleppmitteln, beispielsweise Wasser, Stickstoff oder Kohlendioxid, vorzusehen oder die Polymerisationsstufe a) anionisch durchzuführen. Die anionische Polymerisation von Styrol führt nicht nur zu Styrolpolymeren mit niedrigem Styrolmonomeranteil, sondern gleichzeitig zur geringen Styrololigomerenanteilen.

Bei Verwendung von Peroxiden als Flammschutzmittel werden die Reststyrol-Gehalte des treibmittelhaltigen Granulats überraschenderweise signifikant gesenkt. Durch die Peroxid-Zugabe wird nur eine leichte Reduzierung des mittleren Molekulargewichts beobachtet, es wird jedoch keine wesentliche Entstehung von Oligomeren oder Monomeren gefunden. Dies ermöglicht einerseits die Verwendung von Polystyrolschmelzen mit höheren Restmonomer-Gehalten, was wiederum geringeren Aufwand bei der Entgasung nach dem Polystyrol-Reaktor beinhaltet. Andererseits können ausgehend von bereits weitgehend entgastem Polystyrol die Restmonomer-Gehalte noch weiter gesenkt werden. Auf diese Weise können EPS-Granulate mit Restmonomer-Gehalten unter 250 ppm erreicht werden.

Zur Verbesserung der Verarbeitbarkeit können die fertigen expandierbaren Styrolpolymergranulate durch Glycerinester, Antistatika oder Antiverklebungsmittel beschichten werden.

Das EPS Granulat kann mit Glycerinmonostearat GMS (typischerweise 0,25%), Glycerintristearat (typischerweise 0,25%) feinteiliger Kieselsäure Aerosil R972 (typischerweise 0,12%) und Zn-Stearat (typischerweise 0,15%), sowie Antistatikum beschichtet werden.

Die erfindungsgemäßen expandierdierbaren Styrolpolymergranulate können in einem ersten Schritt mittels Heißluft oder Wasserdampf zu Schaumpartikeln mit einer Dichte im Bereich von 8 bis 100 g/l vorgeschäumt und in einem 2. Schritt in einer geschlossenen Form zu Partikelformteilen verschweißt werden.

### Beispiele:

### Einsatzstoffe:

PS148 G (Polystyrol der BASF AG mit einer Viskositätszahl VZ von 83 ml/g, mittlerem Molekulargewicht M_{w} von 220.000 g/mol und einer Uneinheitlichkeit M_{w}/Mₙ von 2,9)

PS158 K (Polystyrol der BASF AG mit einer Viskositätszahl VZ von 98 ml/g, mittlerem Molekulargewicht M_{w} von 280.000 g/mol und einer Uneinheitlichkeit M_{w},/Mₙ von 2,8)

HBCD: Hexabromcyclododekan FR-1206 Hat der Fa. Eurobrom (Flammschutzmittel)

Flammschutzsynergisten:
Di-tert.-butyl-peroxid (Trigonox® B),
Tert.-butyl-hydroperoxid (Trigonox® A80)
50 Gew.-ige Lösung von Dicumylperoxid in Pentan

### Beispiel 1, 2, 4 und 5:

Zu einem Hauptstrom einer treibmittelhaltige Polymerschmelze (Polystyrol 148 G und 7 Gew.-% n-Pentan) wurde nach Abkühlen von 260°C auf 190°C über einen Seitenextruder in einer Polystyrolschmelze vorgemischtes Hexabromcyclododekan (HBCD) gemäß den Angaben in Tabelle 1 (zugegebenen Mengen in Gewichtsprozent, bezogen auf Polystyrol) zudosiert. Auf gleicher Höhe wurde über eine Kolbenpumpe und Dosierlanze der Flammschutzsynergist zudosiert. Die resultierende Polymerschmelze wurde bei einem Durchsatz von 60 kg/h durch eine Düsenplatte mit 32 Bohrungen (0,75 mm Durchmesser) gefördert und mit Hilfe einer druckbeaufschlagten Unterwassergranulierung zu kompakten Granulaten mit enger Größenverteilung granuliert.

### Beispiel 3 und 6

Beispiel 1 wurde mit Polystyrol 158 K der BASF AG mit einer Viskositätszahl VZ von 98 ml/g, mittlerem Molekulargewicht M_{w} von 280.000 g/mol und einer Uneinheitlichkeit M_{w}/Mₙ von 2,8 gemäß den Angaben in Tabelle 1 wiederholt.

### Vergleichsversuche V1 bis V5

Beispiel 1 bzw. 6 (Vergleichsversuch 2) wurde wiederholt, wobei HBCD und/oder Flammschutzsynergist weggelassen wurden.

### Beispiel 7 (Vergleich)

Beispiel 1 wurde wiederholt mit dem Unterschied, dass die Flammschutzsynergisten zusammen mit dem Flammschutzmittel über den Seitenextruder zudosiert wurden.

Die erhaltenen expandierbaren Polystyrolgranulate wurden in strömendem Wasserdampf zu Schaumstoffpartikel mit einer Dichte von etwa 20 g/l vorgeschäumt und nach 24-stündiger Lagerung in gasdichten Formen mit Wasserdampf zu Schaumstoffkörpern verschweißt.

Nach 72-stündiger Lagerung der Schaumstoffkörper wurde das Brandverhalten bestimmt. Hierfür wurden die Schaumstoffkörper in einem Horizontalbrandtest 2 Sekunden lang mit einer Bunsenbrennerflamme beflammt und anschließend aus der Flamme entfernt. Nachbrennzeiten von unterhalb 6 Sekunden sind geeignet um den B2 Test nach DIN 4102 zu bestehen.

Die Menge an Flammschutzmittel (Dosierung) sowie die Ergebnisse des Brandschutztestes und die Viskositätszahl VZ, gemessen im EPS-Partikelschaum, sind in Tabelle 1 zusammengefasst. Tabelle 2 zeigt das Schäumverhalten der Beispiele 3 und 4 und der Vergleichsversuche V1 und V2.

**Tabelle 1:**

| Beispiel | HBCD [Gew.-%] | Synergist [Gew.-%] | Synergist | Nachbrennzeit [sec.] | PS | VZ | Reststyrol [ppm] |
|---|---|---|---|---|---|---|---|
| V1 | - | + | - | brennt ab | 148 G | 79 | 500 |
| V2 | - | - | - | brennt ab | 158 K | 89 | 540 |
| V3 | - | 0,4 | Trigonox® A80 | brennt ab | 148 G | | |
| V4 | - | 0,4 | Trigonox® B | brennt ab | 148 G | | |
| V5 | 1,5 | - | - | brennt ab | 148 G | | |
| 1 | 1,5 | 0,4 | Trigonox® B | 0,5 | 148 G | | |
| 2 | 0,9 | 0,4 | Trigonox® B | 1,6 | 148 G | | 219 |
| 3 | 0,6 | 0,2 | Trigonox® B | 3,8 | 158 K | 80 | 242 |
| 4 | 1,5 | 0,4 | Trigonox® A80- | 5,6 | 148 G | 74 | |
| | | | Trigonox® | | 148 G | | |
| | | | A80/ | | | | |
| 5 | 0,6 | 0,2/0,2 | Trigonox® B | 2,8 | | | |
| | | | Dicumylperoxid | | 158 K | | |
| 6 | 0,6 | 0,3 | - | 5,0 | | | |
| 7 | 0,6 | 0,4 | Trigonox® B | 14,0 | 148G | | |

**Tabelle 2: Schüttdichte in Abhängigkeit von der Schäumzeit**

| Schäumzeit | V1 | V2 | Beispiel 3 | Beispiel 4 |
|---|---|---|---|---|
| [sec] | | | | |
| 2 | 20,0 | | 21,0 | 18,6 |
| 4 | 16,1 | 22,4 | 16,5 | 13,2 |
| 5 | | 19,2 | | 12,5 |
| 6 | 13,5 | 18,5 | 13,9 | 13,5 |
| 8 | 14,7 | 16,7 | 14,8 | 15,2 |
| 10 | 17,9 | 15,6 | 17,7 | |

## Patentansprüche

1. Verfahren zur Herstellung von flammgeschützten, expandierbaren Styrolpolymeren (EPS), wobei als Flammschutzmittel eine organische Bromverbindung mit einem Bromgehalt von mindestens 70 Gew.-% und ein flüssiges Per-oxid, Hydroperoxid oder eine Peroxidlösung als Flammschutzsynergist eingesetzt wird, **dadurch gekennzeichnet, dass** das Flammschutzmittel in einem Seitenextruder mit einem Anteil Styrolpolymerschmelze vorgemischt und der Flammschutzsynergist mittels einer Pumpe einer Treibmittel-haltigen Styrolpolymerschmelze im Hauptstrom zudosiert und gemeinsam durch eine Düsenplatte mit anschließender Unterwassergranulation extrudiert wird.

2. Verfahren nach Anspruch 1, **dadurch gekennzeichnet, dass** als Flammschutzsynergist Di-tert.-butyl-peroxid, Tert.-butyl-hydroperoxid, eine Lösung von Dicumylperoxid in Pentan oder Mischungen davon eingesetzt wird.

3. Verfahren nach Anspruch 1 oder 2, **dadurch gekennzeichnet, dass** als Flammschutzmittel Hexabromcylododekan verwendet wird.

4. Verfahren nach einem der Ansprüche 1 bis 3, **dadurch gekennzeichnet, dass** die Verweilzeit des Flammschutzmittels und des Flammschutzsynergisten bei einer Schmelzetemperatur im Bereich von 140 bis 220°C weniger als 15 Minuten beträgt.

5. Verfahren nach Anspruch 4, **dadurch gekennzeichnet, dass** die Verweilzeit des Flammschutzmittels und des Flammschutzsynergisten bei einer Schmelzetemperatur im Bereich von 170 bis 200°C weniger als 15 Minuten beträgt.

## Claims

1. A process for producing flame-resistant, expandable styrene polymers (EPS) using an organic bromine compound having a bromine content of at least 70% by weight as flame retardant and a liquid peroxide, hydroperoxide or a peroxide solution as flame retardant synergist, wherein the flame retardant is premixed with a proportion of styrene polymer melt in a side extruder and metered into the main stream of a styrene polymer melt containing blowing agent and the flame retardant synergist is metered by means of a pump into the main stream and the combined stream is extruded through a die plate with subsequent underwater pelletization.

2. The process according to claim 1, wherein di-tert-butyl peroxide, tert-butyl hydroperoxide, a solution of dicumyl peroxide in pentane or a mixture thereof is used as flame retardant synergist.

3. The process according to claim 1 or 2, wherein hexabromocyclododecane is used as flame retardant.

4. The process according to are of claims 1 to 3, wherein the residence time of the flame retardant and of the flame retardant synergist at a melt temperature in the range from 140 to 220°C is less than 15 minutes.

5. The process according to claim 4, wherein the residence time of the flame retardant and of the flame retardant synergist at a melt temperature in the range from 170 to 200°C is less than 15 minutes.

## Revendications

1. Procédé de préparation de polymères du styrène expansible (EPS) ignifugés, un composé bromé organique présentant une teneur en brome d'au moins 70 % en poids étant utilisé en tant qu'agent ignifugeant, et un peroxyde ou hydroperoxyde liquide ou une solution de peroxyde étant utilisé(e) en tant qu'agent synergiste ignifugeante **caractérisé en ce que** l'agent ignifugeant est pré-mélange avec une proportion de masse fondé de polymère du styrène dans une extrudeuse latérale, et l'agent synergiste ignifugeant est ajouté en quantité dosée dans la masse fondue de polymère du styrène convenant un agent gonflant au moyen d'une pompe dans le courant principal, et l'ensemble est extrudé par un plateau matrice avec une granulation sous l'eau subséquente.

2. Procédé selon la revendication 1, **caractérisé en ce que**, en tant qu'agent synergiste ignifugeant, on utilise du peroxyde de di-tert-butyle, de l'hydroperoxyde de tert-butyle, une solution de peroxyde de dicumyle dans du pentane ou leurs mélanges.

3. Procédé selon la revendication 1 ou 2, **caractérisé en ce que** l'on utilise de l'hexabromocyclododécane en tant qu'agent ignifugeant.

4. Procédé selon l'une quelconque des revendications 1 à 3, **caractérisé en ce que** le temps de séjour de l'agent ignifugeant et de l'agent synergiste ignifugeant à une température de masse fondue dans la plage de 140 à 220°C est inférieur à 15 minutes.

5. Procédé selon la revendication 4, **caractérisé en ce que** le temps de séjour de l'agent ignifugeant et de l'agent synergiste ignifugeant à une température de masse fondue dans la plage de 170 à 200°C est inférieur à 15 minutes.
